# EUROPÄISCHE PATENTANMELDUNG

(11) **EP 2 140 927 A1**
(43) Veröffentlichungstag der Anmeldung: **06.01.2010**
(21) Anmeldenummer: 09008437.7
(22) Anmeldetag: 29.06.2009
(51) Int. Cl.: B01D 53/94, B01J 35/00

(54) **Nanopartikel-beschichteter Wabenkörper**

(30) Priorität: 04.07.2008 DE 202008009047 U
(71) Anmelder: KBA-MetalPrint GmbH, 70435 Stuttgart (DE)
(72) Erfinder: Decker, Dietmar, 70190 Stuttgart (DE); Hänel, Matthias, 74394 Hessigheim (DE)
(74) Vertreter: Grosse, Rainer

(57) **Zusammenfassung**

Die Erfindung betrifft einen Wabenkörper, insbesondere zur thermischen und/oder katalytischen Abgasreinigung, mit mehreren, von einem Fluid durchströmbaren Fluidkanälen. Das Gerät ist **dadurch gekennzeichnet, dass** zumindest ein Anteil einer Kanaloberfläche (8) zumindest eines Anteils der Fluidkanäle (4) eine Beschichtung aus katalytisch wirkenden Nanopartikeln (13) aufweist.

## Beschreibung

Die Erfindung betrifft einen Wabenkörper, insbesondere zur thermischen und/oder katalytischen Abgasreinigung, mit mehreren, von einem Fluid durchströmbaren Fluidkanälen.

Wabenkörper der eingangs genannten Art sind bekannt. Sie werden beispielsweise bei der thermischen und/oder katalytischen Abgasreinigung eingesetzt. Zu diesem Zweck ist der Wabenkörper von mehreren Fluidkanälen durchsetzt, die von einem Fluid durchströmbar sind. Üblicherweise wird eine Anordnung von mehreren Wabenkörpern von einem erhitzten Fluid, beispielsweise heißer Luft, durchströmt. Das erhitzte Fluid gibt an die Wandungen der Fluidkanäle und damit an den Wabenkörper Wärme ab und bringt den Wabenkörper somit auf eine Betriebstemperatur. Wenn diese erreicht ist, wird die Durchleitung des erhitzten Fluids gestoppt und ein zu reinigendes Abgas durch die Wabenkörper beziehungsweise dessen Fluidkanäle geleitet. Bei diesem Vorgang geht wiederum Wärme von dem Wabenkörper auf das Abgas über, womit dieses erhitzt wird und eine der Abgasreinigung dienende chemische Reaktion eingeleitet werden kann. Um die chemischen Reaktionen zu beschleunigen und/oder bei einem geringeren Energieeinsatz stattfinden zu lassen, können die Oberflächen der Fluidkanäle mit einer katalytisch wirkenden Beschichtung versehen sein. Um dies zu erreichen, werden häufig Edelmetalle, beispielsweise Gold und/oder Platin, auf die Oberfläche aufgebracht. Um die katalytische Reaktion möglichst effizient ablaufen zu lassen, ist eine große Oberfläche, auf der das Fluid mit dem katalytisch wirkenden Stoff in Verbindung treten kann, notwendig. Um eine vergrößerte wirksame Oberfläche der Fluidkanäle zu erzielen, kann der Wabenkörper, einschließlich seiner Fluidkanäle, mit einer Beschichtung (Washcoat) versehen sein. Diese Vorgehensweise, die im Stand der Technik bekannt ist, erhöht die Porosität der Oberfläche und vergrößert damit die wirksame Oberfläche. Ein Washcoat der beschriebenen Art enthält Partikel, die an der Oberfläche des Trägers anliegen und mit dieser durch einen Kalzinierprozess verbunden sind. Üblicherweise werden als Bestandteil eines solchen Washcoats Partikel eingesetzt, die eine Größe zwischen 1 µm bis 10 µm aufweisen. Häufig wird im Stand der Technik auch beschrieben, dass auf diese porositätserhöhende beziehungsweise die oberflächenvergrößernde Beschichtung eine weitere, katalytisch wirkende Beschichtung aufgebracht wird. Nachteilig ist bei dieser Vorgehensweise vor allem, dass bei einem Washcoat üblicherweise ab einer Temperaturbelastung von 700°C Sinterungseffekte auftreten, die die oberflächenvergrößernde Wirkung beeinträchtigen. Weiterhin muss das Auftragen der Beschichtung in zwei Schritten erfolgen, wobei zunächst der Washcoat und anschließend eine Beschichtung, die eine katalytische Wirkung aufweist, aufgebracht werden. Die vorstehenden Ausführungen zeigen, dass der Aufbau einer katalytischen Abluftreinigungsvorrichtung, die bei niedrigen Temperaturen betrieben werden kann, generell mit vergleichsweise hohen Kosten verbunden ist, weil fein strukturierte Wabenkörper eingesetzt werden müssen.

Aufgabe der Erfindung ist es somit, einen Wabenkörper aufzuzeigen, der im Vergleich zum Stand der Technik eine verbesserte Reinigungswirkung bei geringerem Energieeinsatz auf durch den Wabenkörper geleitete Abgase aufweist und gleichzeitig einfach und günstig herzustellen ist.

Dies wird erfindungsgemäß dadurch erreicht, dass zumindest ein Anteil einer Kanaloberfläche zumindest eines Anteils der Fluidkanäle eine Beschichtung aus katalytisch wirkenden Nanopartikeln aufweist. Hierbei werden die Nanopartikel direkt auf die Oberfläche der Wabenkörper aufgebracht, womit die Notwendigkeit einer Washcoat-Beschichtung entfällt. Die Beschichtung mit Nanopartikeln vergrößert die wirksame Oberfläche der Fluidkanäle des Wabenkörpers weitaus stärker, als dies mit einem Washcoat möglich wäre. Die erreichbare wirksame Oberfläche liegt ein bis zwei Größenordnungen über der mit einem Washcoat erzielbaren. Weiterhin weisen die Nanopartikel überraschenderweise direkt katalytische Wirkungen auf. Damit entfällt der Bearbeitungsschritt, in dem auf einen Washcoat eine zusätzliche Beschichtung zur Erzielung einer katalytischen Wirkung aufgetragen werden musste. Die Beschichtung aus katalytisch wirkenden Nanopartikeln ist extrem temperaturstabil und zeigt auch bei Temperaturen größer als 800 bis 900°C keinerlei Sinterungseffekte auf. Das Auftragen der Nanopartikel auf die poröse Oberfläche des Wabenkörpers erfolgt bevorzugt durch einen Tauchprozess. Dabei liegen die Nanopartikel in Form einer Lösung oder einer Suspension vor, in die der Wabenkörper eingelassen wird. In der Beschichtung bilden sich zwischen den Nanopartikeln Hohlräume aus. Während der Luftdurchströmungs-Periode werden in der Beschichtung Sauerstoffmoleküle gespeichert. Werden nun der Wabenkörper beziehungsweise die Fluidkanäle mit Abgas durchströmt, so werden die Schadstoffe beziehungsweise einzelne Moleküle in die Beschichtung beziehungsweise die Hohlräume aufgenommen und reagieren dort mit dem in der Beschichtung gespeicherten Sauerstoff. Dieser katalytische Effekt der Reaktion mit dem in den Hohlräumen gespeicherten Sauerstoff kann durch Einbringen von katalytisch wirkenden Stoffen in Form von Nanopartikeln noch verstärkt werden. Ein üblicher Temperaturbereich für eine solche Reaktion liegt beispielsweise zwischen 250°C und 550°C.

Durch die sehr starke Oberflächenvergrößerung durch die Beschichtung können vergleichsweise grob strukturierte Wabenkörper verwendet werden. Dies ist mit einem bedeutenden Kostenvorteil gegenüber den üblichen fein strukturierten Wabenkörpern verbunden. Ein Kostenvergleich zwischen fein strukturierten Wabenkörpern ohne und grob strukturierten Wabenkörpern mit Beschichtung kann damit möglicherweise bereits zu Gunsten der beschichteten Wabenkörper ausfallen.

Eine bevorzugte Weiterbildung der Erfindung sieht vor, dass der Wabenkörper aus Keramik, insbesondere Silikatkeramik, Porzellan oder Aluminium-Magnesiumsilikat, besteht. Keramiken weisen üblicherweise eine hohe Porosität der Oberfläche sowie eine hohe Rohdichte auf. Aufgrund der hohen Porosität liegt auch eine große wirksame Oberfläche des Wabenkörpers vor, sodass der Wabenkörper eine bestimmte Menge an Wärmeenergie sowohl schneller aufnehmen als auch schneller abgeben kann. Die große Rohdichte kann auch dazu führen, dass der Wabenkörper eine größere Menge an Wärmeenergie speichern kann. Durch die hohe Porosität der Oberfläche des Wabenkörpers wird die oberflächenvergrößernde Wirkung der Nanopartikel weiter verstärkt. Außerdem erhöht sie die Bindungsstärke der Nanopartikel an die Oberfläche.

Eine vorteilhafte Weiterbildung der Erfindung sieht vor, dass die Beschichtung eine Schichtdicke von 10 µm bis 500 µm, insbesondere etwa 50 µm, aufweist. Ein sinnvoller Bereich der Schichtdicke wird von dem Umstand vorgegeben, dass einerseits eine möglichst große Oberfläche vorhanden sein soll, und damit die Schichtdicke möglichst groß sein sollte, aber andererseits langkettige Verbindungen, wie sie in Abgasen vorkommen können, nur begrenzt in die Schicht eindringen können. Größere Schichtdicken sind zwar ohne weiteres herstellbar, allerdings wird durch eine weitere Steigerung der Schichtdicke keine stärkere katalytische Wirkung erzielt, sondern lediglich der Strömungswiderstand in den Fluidkanälen erhöht.

Eine Weiterbildung der Erfindung sieht vor, dass die Fluidkanäle in einem Querschnitt des Wabenkörpers eine Dichte von 25 cpsi bis 60 cpsi (cells per square inch/Zellen pro Quadratzoll, wobei eine Zelle einem Fluidkanal entspricht) aufweisen. Der angegebene Bereich entspricht etwa 1,5 bis 15,5 Fluidkanälen pro Quadratzentimeter. Wabenkörper, die dem Stand der Technik entsprechen, weisen üblicherweise eine Dichte der Fluidkanäle von etwa 100 cpsi bis 400 cpsi (entspricht etwa 3,5 bis 9,5 Fluidkanälen pro Quadratzentimeter) auf. Die Beschichtung mit katalytisch wirkenden Nanopartikeln erlaubt bei einer erfindungsgemäßen Ausgestaltung des Wabenkörpers eine deutlich verringerte Fluidkanal-Dichte, womit der Wabenkörper wesentlich günstiger herzustellen ist. Durch die Nanopartikel-Beschichtung wird dennoch eine deutlich bessere katalytische Wirkung als in herkömmlichen Wabenkörpern erzielt. Weiterhin erleichtert die geringe Dichte der Fluidkanäle die Aufbringung der Beschichtung, da die Fluidkanäle bedingt durch die geringe Dichte einen vergleichsweise großen Querschnitt aufweisen. Damit kann das Auftragen der Beschichtung mit Hilfe eines einfachen Tauchprozesses, insbesondere ohne Druckbeaufschlagung, erfolgen, bei dem der Wabenkörper in eine Nanopartikel-Lösung eingetaucht wird und diese Lösung ohne weitere Hilfsmittel die komplette Oberfläche des Wabenkörpers benetzen kann.

Eine vorteilhafte Weiterbildung der Erfindung sieht vor, dass die Nanopartikel aus Metalloxid bestehen oder Metalloxid aufweisen. Dabei sind insbesondere die Metalloxide Aluminiumoxid und/oder Siliziumdioxid zu nennen. Es kann jedoch auch ein anderes Material wie Metall, Halbleiter und/oder Kohlenstoff vorgesehen sein.

Eine Weiterbildung der Erfindung sieht vor, dass zumindest ein Teil der Nanopartikel zumindest einen Anteil zumindest eines Edelmetalls und/oder zumindest eines anderen Metalls, insbesondere Kupfer und/oder Nickel, enthalten. Durch die Verwendung von Nanopartikeln aus Edelmetall und/oder einer Edelmetalllegierung und/oder einem anderen Metall, beispielsweise Kupfer und/oder Nickel, wird die katalytische Wirkung der Nanopartikel-Beschichtung weiter erhöht. Durch die bereits beschriebene Ausbildung von Hohlräumen in der Nanopartikel-Beschichtung, in denen Sauerstoffmoleküle zwischengespeichert werden, sowie der, im Vergleich zu den aus dem Stand der Technik bekannten Washcoats, ein bis zwei Größenordnungen größeren Oberfläche, wird die katalytische Wirkung von Zusatzmaterialien begünstigt. Diese Zusatzmaterialien können beliebig gewählt werden, insofern diese in Form von Nanopartikeln vorliegen. Um dem Grundgedanken der Erfindung Rechnung zu tragen, wird hier vorzugsweise ein Zusatzmaterial gewählt, das eine katalytische Wirkung auf die Abgaszersetzungsreaktion hat. Üblicherweise werden Zusatzmaterialien wie beispielsweise Edelmetalle, vorzugsweise Platin, Palladium und/oder Rhodium, verwendet.

Eine vorteilhafte Weiterbildung der Erfindung sieht vor, dass die Nanopartikel durch ein Befestigungsmittel, das zumindest einen Anteil Titan- und/oder Zirkoniumoxid aufweist, an dem Wabenkörper befestigt sind. Dieses Befestigungsmittel dient der dauerhaften und stabilen Fixierung der Nanopartikel auf der porösen Oberfläche des Wabenkörpers.

Eine Weiterbildung der Erfindung sieht vor, dass die Nanopartikel jeweils Abmessungen von 1 nm bis 100 nm aufweisen. Partikel in dieser Größenordnung weisen erfindungsgemäß eine katalytische Wirkung in der in den vorhergehenden Ausführungen beschriebenen Weise auf.

Eine Weiterbildung der Erfindung sieht vor, dass der Wabenkörper eine Kantenlänge von 50 mm bis 200 mm, insbesondere 100 mm bis 200 mm aufweist. Wabenkörper in dieser Größenordnung können in einfacher Weise in Zusammenstellung aus mehreren dieser Wabenkörper verwendet werden.

Eine Weiterbildung der Erfindung sieht vor, dass der Wabenkörper im Wesentlichen quaderförmig ausgebildet ist. Die quaderförmige Ausbildung des Wabenkörpers erleichtert ein Anordnen mehrerer Wabenkörper nebeneinander oder übereinander.

Eine Weiterbildung der Erfindung sieht vor, dass ein quer zu den Erstreckungen der Fluidkanäle verlaufende Querschnitt des Wabenkörpers im Wesentlichen rechteckig, vorzugsweise quadratisch ist.

Erfindungsgemäß ist weiterhin vorgesehen, dass die Fluidkanäle im Wesentlichen geradlinig verlaufen. Dadurch ist sichergestellt, dass die Fluidkanäle zweier, in Richtung der Fluidkanäle, üblicherweise vertikal, benachbarter Wabenkörper bei fluchtender Anordnung der Wabenkörper miteinander kommunizieren können und dass ein durchströmendes Fluid von den Fluidkanälen des einen Wabenkörpers in die Fluidkanäle des anderen Wabenkörpers strömen kann. Um einen Strömungsaustausch auch senkrecht zu einer Fluidkanal-Ausrichtung, also üblicherweise in horizontaler Richtung, zu ermöglichen, können die Wabenkörper in vertikaler Richtung mit einem gewissen Abstand zueinander ausgerichtet sein. Der räumliche Abstand zwischen den Wabenkörpern ermöglicht eine Quervermischung des Fluids zwischen den einzelnen Lagen. Zu diesem Zweck können die Wabenkörper eine Beabstandungseinrichtung, beispielsweise Standfüße, aufweisen.

Eine Weiterbildung der Erfindung sieht vor, dass die Fluidkanäle im Wesentlichen den gleichen Querschnitt aufweisen. Der Querschnitt der Fluidkanäle kann grundsätzlich passend zum Einsatzzweck der Wabenkörper frei gewählt werden. Weisen jedoch alle Fluidkanäle den gleichen Querschnitt auf, so ergeben sich sowohl fertigungstechnische Vorteile als auch eine gleichmäßige Belastung, insbesondere thermische Belastung, des Wabenkörpers bei Durchströmen mit einem Fluid. Weiterhin kann bei Fluidkanälen mit gleichem Querschnitt davon ausgegangen werden, dass die katalytische Wirkung der Nanopartikel-Beschichtung zumindest eine ähnliche Größenordnung erreicht.

Eine Weiterbildung der Erfindung sieht vor, dass der Querschnitt der Fluidkanäle im Wesentlichen rechteckig, vorzugsweise quadratisch, ist.

Eine Weiterbildung der Erfindung sieht vor, dass mindestens eine Seitenwand mindestens eines Fluidkanals gleichfalls eine Seitenwand eines benachbarten Fluidkanals bildet. Erfindungsgemäß ist vorgesehen, dass ein Großteil des Volumens des Wabenkörpers von Fluidkanälen durchsetzt ist.

Eine erfindungsgemäße Weiterbildung des Wabenkörpers sieht vor, dass er als extrudierter Körper ausgebildet ist.

Der erfindungsgemäße Wabenkörper soll nun anhand eines Ausführungsbeispiels, das in der Zeichnung dargestellt ist, verdeutlicht werden. Dabei zeigen
- Figur 1: ein Beispiel eines erfindungsgemäßen Wabenkörpers in schematischer Form und
- Figur 2: den schematischen Querschnitt eines mit katalytisch wirkenden Nanopartikeln beschichteten Fluidkanals.

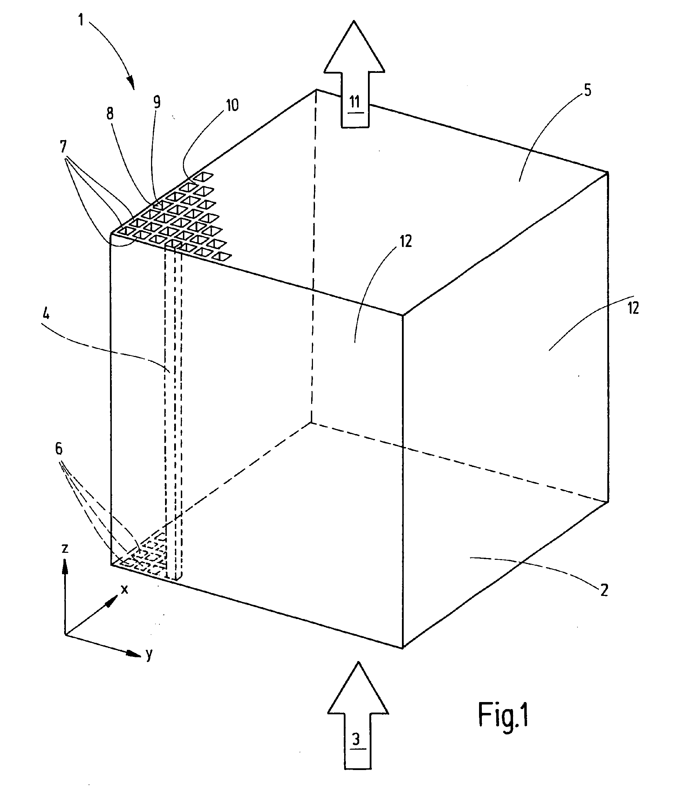

Die Figur 1 zeigt schematisch einen Wabenkörper 1, der an seiner Fluideintrittsseite 2 von einem Fluid 3 angeströmt wird. Der Querschnitt des Wabenkörpers 1 liegt in der X-Y-Ebene. Parallel zur Z-Achse des Wabenkörpers 1 verläuft eine Vielzahl von Fluidkanälen 4, die sowohl an der Fluideintrittsseite 2 als auch an der Fluidaustrittsseite 5 geöffnet sind und das gesamte Volumen des Wabenkörpers 1 ausfüllen. Zur besseren Übersicht ist in der Figur lediglich ein Fluidkanal 4 eingezeichnet. Die Fluidkanäle 4 verlaufen geradlinig und weisen untereinander im Wesentlichen den gleichen, quadratischen Querschnitt auf. Die Anordnung der Fluidkanäle 4 ist dabei so gewählt, dass mindestens eine Seitenwand 10 mindestens eines Fluidkanals 4 gleichfalls eine Seitenwand 10 eines benachbarten Fluidkanals 4 bildet. Auch die Fluideintrittsöffnungen 6 sowie die Fluidaustrittsöffnungen 7 sind nur exemplarisch dargestellt und erstrecken sich in der Realität über die gesamte Fluideintrittsseite 2 beziehungsweise die gesamte Fluidaustrittsseite 5.

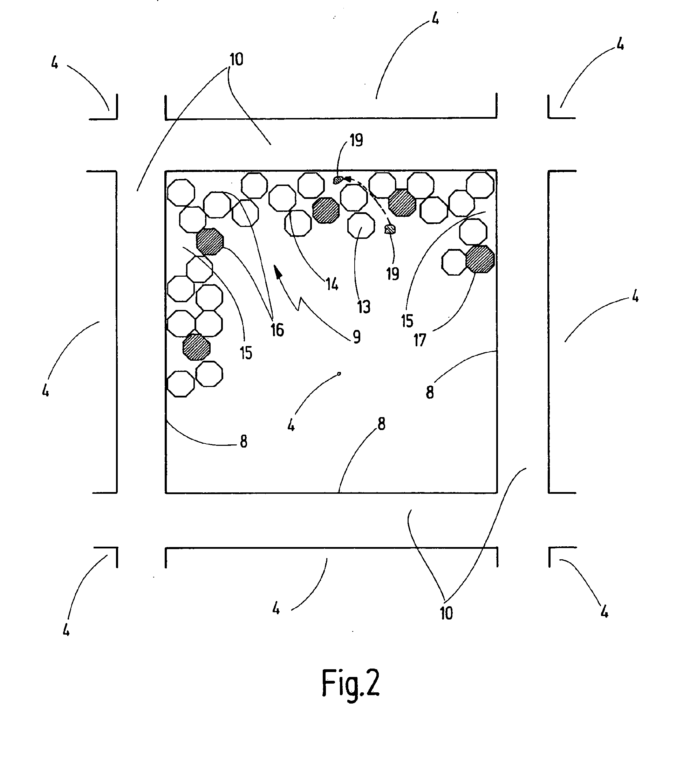

Um die Reinigungsleistung des Wabenkörpers 1 zu erhöhen, ist die Oberfläche 8 jedes Fluidkanals 4 mit einer katalytisch wirkenden Beschichtung 9 versehen. Diese ist schematisch in Figur 2 abgebildet. Dargestellt ist zur besseren Übersichtlichkeit nur eine teilweise Beschichtung der Oberfläche 8. Die Figur 2 zeigt unter anderem schematisch einen Fluidkanal 4 in einem Wabenkörper 1, der von Seitenwänden 10 umgeben ist, die gleichzeitig eine Begrenzung für angrenzende Fluidkanäle 4 bildet. Aus der Anordnung der dargestellten Fluidkanäle 4 ist zu entnehmen, dass sich der mittlere Fluidkanal 4 nicht direkt an eine Seitenwandung 12 des Wabenkörpers 1 anschließt, sondern sich weiter innerhalb des Wabenkörpers 1 befindet. Die Beschichtung 9 setzt sich aus Nanopartikeln 13 zusammen. Die Nanopartikel 13 treten nur an einzelnen Kontaktstellen 14 miteinander in Berührung, wodurch sich keine geschlossene Deckschicht der Oberfläche 8 bildet. Vielmehr bilden sich zwischen den Nanopartikeln 13 Hohlräume 15 aus. Durch die Hohlräume 15 und den losen Kontakt der Nanopartikel 13 an den Kontaktstellen 14 kann das durch den Wabenkörper 1 strömende Fluid 3 mit einem Großteil der Oberfläche 16 der Nanopartikel 13 in Kontakt treten. Damit vergrößert sich die Oberfläche 8 des Fluidkanals 4 um ein Vielfaches, womit die katalytische Wirkung des Wabenkörpers 1 deutlich erhöht wird. Es kann erfindungsgemäß vorgesehen sein, dass einzelne Nanopartikel 13 aus einem Fremdelement 17 bestehen. Dabei wird für das Fremdelement 17 vorzugsweise ein Material gewählt, dass die katalytische Wirkung des Wabenkörpers 1 weiter begünstigt, beispielsweise Edelmetalle und/oder andere Metalle, beispielsweise Kupfer und/oder Nickel.

Es ergibt sich folgende Funktionsweise: Nachdem der Wabenkörper 1 auf die gewünschte Betriebstemperatur gebracht wurde, wird er mit dem Fluid 3 angeströmt, bei dem es sich üblicherweise um ein zu reinigendes Abgas handelt. Das Fluid 3 strömt durch die Fluideintrittsöffnungen 6 in die Fluidkanäle 4 ein. Durch die Aufnahme von Wärmeenergie und durch die katalytisch wirkende Beschichtung 9 finden im Fluid 3 beim Durchströmen der Fluidkanäle 4 chemische Reaktionen statt, sodass ein chemisch verändertes, insbesondere gereinigtes, Fluid 11 den Wabenkörper 1 durch die Fluidaustrittsöffnungen 7 verlässt. Die Reinigungsleistung lässt sich weiter steigern, wenn der Wabenkörper 1 entlang der Z-Achse verlängert wird oder wenn mehrere Wabenkörper 1 entlang der Z-Achse übereinandergestapelt werden. In Abhängigkeit von der Menge des zu reinigenden Fluids 3 können in der X-Y-Ebene auch mehrere Wabenkörper 1 nebeneinander angeordnet werden, um so den Durchsatz je Zeiteinheit zu erhöhen. Die katalytisch wirkende Beschichtung 9 aus Nanopartikeln 13 weist nun noch die Besonderheit auf, dass Elemente 18, insbesondere Moleküle 19, die in dem Fluid 3 beziehungsweise Abgas enthalten sind, in die Hohlräume 15 zwischen den Nanopartikeln 13 gelangen können. Dort reagieren sie mit dem dort gespeicherten Sauerstoff, insbesondere aufgrund der katalytischen Wirkung der Beschichtung 9 und der Fremdelemente 17. Hierdurch wird die katalytische Wirkung des Wabenkörpers 1 im Vergleich zu einem Wabenkörper nach dem Stand der Technik deutlich erhöht.

## Patentansprüche

1. Wabenkörper, insbesondere zur thermischen und/oder katalytischen Abgasreinigung, mit mehreren, von einem Fluid durchströmbaren Fluidkanälen, **dadurch gekennzeichnet, dass** zumindest ein Anteil einer Kanaloberfläche (8) zumindest eines Anteils der Fluidkanäle (4) eine Beschichtung aus katalytisch wirkenden Nanopartikeln (13) aufweist.

2. Wabenkörper nach Anspruch 1, **dadurch gekennzeichnet, dass** der Wabenkörper (1) aus Keramik, insbesondere Silikatkeramik, Porzellan oder Aluminium-Magnesiumsilikat, besteht.

3. Wabenkörper nach einem oder mehreren der vorhergehenden Ansprüche, **dadurch gekennzeichnet, dass** die Beschichtung (9) eine Schichtdicke von 10 µm bis 400 µm, insbesondere etwa 50 µm, aufweist.

4. Wabenkörper nach einem oder mehreren der vorhergehenden Ansprüche, **dadurch gekennzeichnet, dass** die Fluidkanäle (4) in einem Querschnitt des Wabenkörpers (1) eine Dichte von 10 bis 100 cpsi (cpsi = cells per square inch / Zellen pro Quadratzoll, entspricht etwa 1,5 bis 15,5 Fluidkanälen pro Quadratzentimeter), insbesondere etwa 25 bis 60 cpsi (entspricht etwa 3,5 bis 9,5 Fluidkanälen pro Quadratzentimeter) aufweisen.

5. Wabenkörper nach einem oder mehreren der vorhergehenden Ansprüche, **dadurch gekennzeichnet, dass** die Nanopartikel (13) aus Metalloxid, insbesondere Aluminiumoxid und/oder Siliziumdioxid, bestehen oder aufweisen.

6. Wabenkörper nach einem oder mehreren der vorhergehenden Ansprüche, **dadurch gekennzeichnet, dass** zumindest ein Teil der Nanopartikel (13) zumindest einen Anteil zumindest eines Edelmetalls und/oder zumindest eines anderen Metalls enthält.

7. Wabenkörper nach einem oder mehreren der vorhergehenden Ansprüche, **dadurch gekennzeichnet, dass** die Nanopartikel (13) durch ein Befestigungsmittel, das zumindest einen Anteil Titan- und/oder Zirkoniumoxid aufweist, an dem Wabenkörper (1) befestigt sind.

8. Wabenkörper nach einem oder mehreren der vorhergehenden Ansprüche, **dadurch gekennzeichnet, dass** die Nanopartikel (13) jeweils Abmessungen von 1 nm bis 100 nm aufweisen.

9. Wabenkörper nach einem oder mehreren der vorhergehenden Ansprüche, **dadurch gekennzeichnet, dass** der Wabenkörper (1) eine Kantenlänge von 50 mm bis 200 mm, insbesondere 100 mm bis 200 mm, aufweist.

10. Wabenkörper nach einem oder mehreren der vorhergehenden Ansprüche, **dadurch gekennzeichnet, dass** der Wabenkörper (1) im Wesentlichen quaderförmig ausgebildet ist.

11. Wabenkörper nach einem oder mehreren der vorhergehenden Ansprüche, **dadurch gekennzeichnet, dass** ein quer zu den Erstreckungen der Fluidkanäle (4) verlaufende Querschnitt des Wabenkörpers (1) im Wesentlichen rechteckig, vorzugsweise quadratisch, ist.

12. Wabenkörper nach einem oder mehreren der vorhergehenden Ansprüche, **dadurch gekennzeichnet, dass** die Fluidkanäle (4) im Wesentlichen geradlinig verlaufen.

13. Wabenkörper nach einem oder mehreren der vorhergehenden Ansprüche, **dadurch gekennzeichnet, dass** die Fluidkanäle (4) im Wesentlichen den gleichen Querschnitt aufweisen.

14. Wabenkörper nach einem oder mehreren der vorhergehenden Ansprüche, **dadurch gekennzeichnet, dass** der Querschnitt der Fluidkanäle im Wesentlichen rechteckig, vorzugsweise quadratisch, ist.

15. Wabenkörper nach einem oder mehreren der vorhergehenden Ansprüche, **dadurch gekennzeichnet, dass** mindestens eine Seitenwand (10) mindestens eines Fluidkanals (4) gleichfalls eine Seitenwand (10) eines benachbarten Fluidkanals (4) bildet.

16. Wabenkörper nach einem oder mehreren der vorhergehenden Ansprüche, **dadurch gekennzeichnet, dass** er als extrudierter Körper ausgebildet ist.
